# EUROPÄISCHE PATENTSCHRIFT

(11) **EP 2 011 681 B1**
(45) Veröffentlichungstag und Bekanntmachung des Hinweises auf die Patenterteilung: **18.08.2010**
(21) Anmeldenummer: 08011557.9
(22) Anmeldetag: 26.06.2008
(51) Int. Cl.: B60K 6/387, B60K 6/442, F16D 48/06, F16D 48/08, B60W 10/02, B60W 10/08, B60W 30/18, B60W 50/06

(54) **Verfahren zur Steuerung des Moments einer Startkupplung beim Anlassen**
Method for controlling clutch torque during engine start
Procédé de réglage de couple d'un embrayage pendant le démarrage du moteur

(30) Priorität: 05.07.2007 DE 102007031387
(43) Veröffentlichungstag der Anmeldung: 07.01.2009
(73) Patentinhaber: LuK Lamellen und Kupplungsbau Beteiligungs KG, 77815 Bühl (DE)
(72) Erfinder: Reuschel, Michael, 77833 Ottersweier (DE)

(56) Entgegenhaltungen:
- EP-A- 0 922 600
- EP-A- 1 762 452
- DE-A1- 10 260 435
- DE-A1- 10 260 838
- DE-A1- 19 838 853
- DE-A1-102004 002 061
- DE-A1-102004 032 173

## Beschreibung

Die Erfindung betrifft ein Verfahren zur Betätigung einer Startkupplung in einem Hybridfahrzeug mit einer Brennkraftmaschine und einer Elektromaschine, wobei zum Start der Brennkraftmaschine durch die Elektromaschine die Startkupplung in Schließrichtung betätigt wird.

Aus dem Stand der Technik sind Hybridfahrzeuge mit einer Brennkraftmaschine und einer Elektromaschine, die für einen Boosterbetrieb, zur Rekuperation und zum alleinigen Vortrieb des Fahrzeugs ausgelegt sein kann, bekannt. In derartigen Hybridfahrzeugen wird die Elektromaschine in bevorzugter Weise auch zum Start der Brennkraftmaschine verwendet. Hierzu wird eine Startkupplung vor dem Start der Brennkraftmaschine geöffnet, damit die Elektromaschine zuvor beschleunigt werden kann. Anschließend erfolgt ein sogenannter Impulsstart durch Schließen der Startkupplung. Derartige Impulsstarts sind in der Regel kritisch bezüglich des Komforts, insbesondere bei einem Wiederstart des Hybridfahrzeugs nach einer Stillsetzung der Brennkraftmaschine während eines Fahrzeugstillstands beispielsweise an Ampeln oder Bahnübergängen oder sonstiger eingelegter Stopps, bei denen die Fahrt nach kurzer Zeit wieder fortgesetzt werden soll. In derartigen Situationen erwartet der Fahrer keine durch den Anlassvorgang induzierten Komforteinbußen.

In der gattungsbildenden DE 198 38 853 A1 wird eine Hybridantriebsvorrichtung für ein Fahrzeug offenbart. Die Hybridantriebsvorrichtung hat eine Maschine, einen Elektromotor, eine Kupplung, eine Getriebeeinheit und eine Steuereinheit zur Steuerung der anderen Elemente. Die Steuereinheit hat eine Wartezustandssteuereinrichtung zur Realisierung einer konstanten Anlasskennlinie, um das Anlassansprechen beim Anlassen der Maschinen durch Übertragung der Kraft des Elektromotors auf die Maschine und Steuern des Eingriffsdrucks der Kupplung zu verbessern, um somit die Maschine in eine Anlassstartposition zu drehen.

Aufgabe der Erfindung ist die Verbesserung eines Startvorgangs in Bezug auf den Komfort insbesondere bei einem Wiederstart des Hybridfahrzeuges. Darüberhinaus soll die Verbesserung eines Startvorgangs auch die Langzeitstabilität der Startkupplung verbessern, ohne dass ein erhöhter Bauteileaufwand erforderlich ist.

Die Aufgabe wird durch ein Verfahren zur Betätigung einer Startkupplung in einem Hybridfahrzeug mit einer Brennkraftmaschine mit einer Kurbelwelle und einer Elektromaschine mit einem Rotor, wobei zu einem Start der Brennkraftmaschine die Elektromaschine auf eine vorbestimmte Drehzahl beschleunigt und die zwischen Elektromaschine und Brennkraftmaschine wirksame Startkupplung in Abhängigkeit von einem über die Startkupplung zu übertragenden Sollmoment zugestellt wird gelöst, wobei in einer ersten Startphase das Sollmoment auf einen vorgegebenen Wert gesetzt wird und in einer zweiten Startphase bei erkanntem Start der Brennkraftmaschine das Sollmoment abhängig von der Beschleunigung der Kurbelwelle geregelt wird, wobei eine zur Regelung verwendete Sollbeschleunigung abhängig von der Differenzdrehzahl zwischen Kurbelwelle und des Rotors ermittelt wird.

Unter Hybridfahrzeugen werden im Sinne der Erfindung alle Fahrzeuge mit einer Brennkraftmaschine und einer mit dieser mittels einer Startkupplung koppelbaren Elektromaschine verstanden. Die Startkupplung kann je nach Konfiguration des Antriebsstranges auch dazu verwendet werden, während der Fahrt die Elektromaschine der Brennkraftmaschine zuzuschalten, damit diese einen Boosterbetrieb des Hybridfahrzeuges unterstützt. Weiterhin kann mittels der Startkupplung die Elektromaschine abgekoppelt und dem Antriebsstrang zugeschaltet werden, um einen Antrieb lediglich mit der Elektromaschine vorzusehen oder im Schubbetrieb ohne ein Lastmoment der Brennkraftmaschine rekuperieren zu können. Elektromaschine und/oder Brennkraftmaschine können mittels zumindest einer weiteren Kupplung, beispielsweise einer Reibungskupplung - oder im Falle eines Doppelkupplungsgetriebes mittels zweier Reibungskupplungen - oder mittels einer Flüssigkeitskupplung wie Drehmomentwandler mit dem Getriebe verbunden sein.

Die Startkupplung kann eine trockene oder nasse Reibungskupplung sein, die elektrisch, hydraulisch, elektrohydraulisch oder elektromechanisch betätigt werden kann. Es kann sich um eine zugedrückte, zugezogene, aufgedrückte oder aufgezogene Kupplung handeln.

Die Ermittlung des über die Startkupplung übertragenen Moments, das aufgrund des vorgegebenen Sollmoments eingestellt wird, erfolgt in vorteilhafterweise Weise durch eine Zuordnung eines Kupplungsweges zu einer adaptierbaren Kupplungskennlinie. Eine weitere Möglichkeit ist eine Berechnung aus Motordaten und dem an der Startkupplung anliegenden Schlupf.

In vorteilhafter Weise wird das Verfahren auf einen Wiederstart nach dem Stillsetzen der Brennkraftmaschine während eines Stillstands des Hybridfahrzeugs angewendet. Im Zuge sich verschärfender Abgasvorschriften ist eine Stillsetzung der Brennkraftmaschine zur Kraftstoffeinsparung und dem damit verbundenen verminderten Schadstoffausstoß insbesondere dann vorteilhaft, wenn die Brennkraftmaschine mittels des vorgeschlagenen Verfahrens gestartet wird.

Der in der ersten Startphase vorgegebene Wert für das Sollmoment kann beispielsweise so ausgelegt werden, dass die Brennkraftmaschine unter normalen Voraussetzungen sicher gestartet werden kann. Hierzu können Daten aus Prüfstandsmessungen herangezogen werden. Der Wert kann adaptiert werden, beispielsweise können weitere Einflussgrößen wie die Starttemperatur, Daten der über den Zustand der Brennkraftmaschine und dergleichen in die Ermittlung des Sollmoments eingehen. Dieses Sollmoment kann als Vorsteuergröße betrachtet werden und kann als Vorsteuergröße über die Zeit, die seit der Aufnahme der ersten Startphase vergangen ist, variiert werden. Dies hat sich insbesondere dann als vorteilhaft erwiesen, wenn die Brennkraftmaschine nicht bei dem zuerst angelegten Sollmoment sofort startet beziehungsweise keine Anzeichen erkennbar sind, dass die Brennkraftmaschine bei einer Befeuerung starten wird. Als Anzeichen für einen beginnenden Start können erste Reaktionen dieser, beispielsweise in Form von Drehzahländerungen, ausgewertet werden. Es hat sich als besonders vorteilhaft erwiesen, wenn das Sollmoment in der ersten Startphase in Abhängigkeit von der Zeit ab der beginnenden Startphase erhöht wird, bis ein Start der Brennkraftmaschine erkannt wird. Eine derartige Momentenerhöhung kann rampenförmig erfolgen, es kann im Steuergerät, auch eine Kennlinie hinterlegt werden, die in Abhängigkeit von der Zeit ab Beginn der Startphase ein zeitabhängiges Sollmoment wiedergibt und als Steuergröße für das Sollmoment verwendet werden kann. Mittels einer Kennlinie können insbesondere nicht lineare Änderungen hinterlegt werden, die beispielsweise an die typischen Eigenschaften der Brennkraftmaschine und an andere Einflussparameter, zum Beispiel das Verhalten der Kupplung und/oder der Elektromaschine abgepasst sind. Ist nach einer vorgegebenen Zeit trotz einer Steigerung des vorgesteuerten Sollmoments kein Anzeichen eines Start der Brennkraftmaschine zu erkennen, kann es vorteilhaft sein, die Kupplung bis zu einem maximal übertragbaren Moment zu schließen, um in diesem Ausnahmefall einen sicheren, jedoch weniger komfortablen Start zu bewirken. Eine Zunahme der Vorsteuerungswerte kann vorteilhafterweise weit unterhalb einer Sekunde, bevorzugt bei unter oder gleich 200mS liegen, so dass die Regelung der Startkupplung entsprechend der zweiten Startphase innerhalb einer Sekunde mit hoher Wahrscheinlichkeit erfolgen kann.

Die zweite Startphase umfasst die Regelung der Drehzahl der Kurbelwelle auf eine vorgegebene Zieldrehzahl, an die die Brennkraftmaschine in Abhängigkeit von der Beschleunigung der Kurbelwelle herangeführt wird, indem das Sollmoment abhängig von der Beschleunigung so eingestellt wird, dass die Startkupplung von einem schlupfenden in einen haftenden oder lediglich leicht schlupfenden Betrieb übergeht und die Drehzahlen von Brennkraftmaschine und Elektromaschine einander weitgehend angeglichen werden. Dabei kann es vorteilhaft sein, wenn eine zur Regelung verwendete Sollbeschleunigung abhängig von der Differenzdrehzahl zwischen der Kurbelwelle und des Rotors ermittelt wird. Auch hier kann die gewünschte Sollbeschleunigung in Form einer Kennlinie in Abhängigkeit von der Differenzdrehzahl in einem Steuergerät abgelegt wird und in Abhängigkeit von der Differenzdrehzahl in einer Regelung verwendet wird, wobei bei einer großen Drehzahldifferenz eine hohe Sollbeschleunigung und bei Drehzahlgleichheit eine sehr geringe oder keine Sollbeschleunigung zugeordnet wird.

Wenn die Differenzdrehzahl weitgehend angeglichen ist, kann die Startkupplung ohne Schlupf betrieben werden, indem die Startkupplung vollständig geschlossen wird. Sie kann aber auch insbesondere zur Dämpfung von Schwingungen, die von der Brennkraftmaschine über die Startkupplung übertragen werden können, bei einem kleineren als dem maximal übertragbaren Moment schlupfend betrieben werden, so dass bei Momentenspitzen die Startkupplung schlupft und diese nicht auf den nachfolgenden Antriebsstrang überträgt.

Die Erfindung wird anhand der Figuren 1 bis 5 näher erläutert. Dabei zeigen:
- Figur 1: ein Ausführungsbeispiel eines Antriebsstrangs eines Hybridfahrzeugs,
- Figur 2: eine Diagramm zur Verdeutlichung eines Wiederstarts einer Brennkraftmaschine in Abhängigkeit von der Zeit,
- Figur 3: ein Diagramm mit einer Kennlinie des vorgesteuerten Moments in Abhängigkeit von der Zeit,
- Figur 4: ein Diagramm mit einer Kennlinie der Sollbeschleunigung in Abhängigkeit von der Differenzdrehzahl zwischen Kurbelwelle und Rotor
und
Figur 5 ein Ausführungsbeispiel einer Steuerung der Kupplung in Form eines Blockschaltbilds.

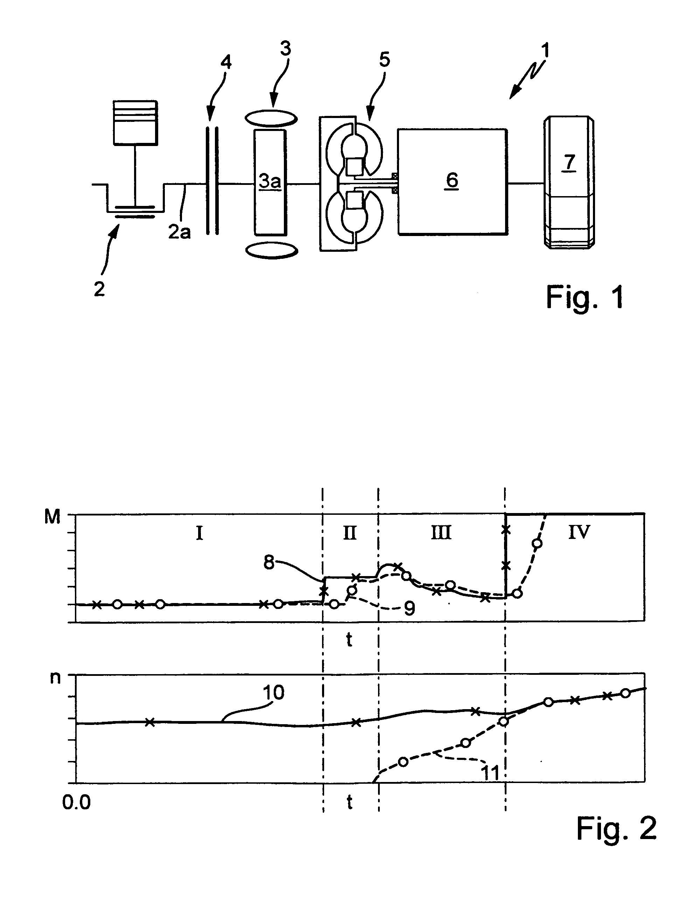

Figur 1 zeigt ein Ausführungsbeispiel eines Antriebsstrangs 1 mit einer Brennkraftmaschine 2 mit einer Kurbelwelle 2a, einer Elektromaschine 3 mit einem Rotor 3a und einer zwischen der Brennkraftmaschine 2 und der Elektromaschine 3 wirksamen Startkupplung 4. Eine weitere Kupplung, die in dem gezeigten Ausführungsbeispiel als Drehmomentwandler 5 ausgeführt ist, der zusätzlich über eine Wandlerüberbrückungskupplung verfügen kann, ist zwischen dem Getriebe 6 und der Elektromaschine 3 angeordnet. Das Getriebe 6 überträgt das von den Antriebseinheiten in Form der Brennkraftmaschine 2 und der Elektromaschine 3 einzeln oder gemeinsam generierte Antriebsmoment an die Antriebsräder 7. Soll die Brennkraftmaschine 2 bei geschlossener Startkupplung 4 ausschließlich Moment übertragen, wird die Elektromaschine 3 stromlos geschaltet, der Rotor 3a dient dabei als Schwungmasse. Bei Bestromung der Elektromaschine und geschlossener Startkupplung 4 übertragen beide Antriebseinheiten Moment auf das Getriebe 6. Soll nur die Elektromaschine 3 antreiben, wird die Startkupplung 4 geöffnet. Soll mittels der Elektromaschine 3 abgebremst werden, wird die Startkupplung 4 geöffnet und die Elektromaschine 3 als Generator betrieben. Zusätzlich kann zur Erzielung eines größeren Verzögerungseffektes das Schleppmoment der Brennkraftmaschine 2 durch Schließen der Startkupplung 4 genutzt werden.

Der Start der Brennkraftmaschine 2 bei Beginn einer Fahrt oder nach dem Stillsetzen der Brennkraftmaschine 2 während eines Stillstands wird die - nicht dargestellte - Wandlerüberbrückungskupplung des Drehmomentwandlers geöffnet oder im Getriebe 6 eine Neutralposition eingestellt sowie die Startkupplung 4 geöffnet, so dass der Rotor 3a der Elektromaschine 3 durch Bestromung beschleunigt werden kann. Die Beschleunigung erfolgt bis zu einer vorgegebenen Drehzahl. Danach wird die Startkupplung entsprechend dem vorgeschlagenen Verfahren geschlossen.

Figur 2 zeigt hierzu in einem zweiteiligen Diagramm anhand des in Figur 1 beschriebenen Ausführungsbeispiels im der oberen Teil die Entwicklung des Moments M und im unteren Teil der Drehzahl n gegen die Zeit t. Dabei zeigt die mit den Marken x versehene Kurve 8 die Entwicklung des über die Startkupplung 4 zu übertragenden Sollmoments und die Kurve 10 die Drehzahl der Elektromaschine 10. Die beiden mit den Marken o gekennzeichneten Figuren zeigen in Form der Kurve 9 das über die Startkupplung übertragene Istmoment und in Form der Kurve 11 die Drehzahl der Kurbelwelle 2a der Brennkraftmaschine 2. Während der Beschleunigungsphase I der Elektromaschine 3 überträgt die Startkupplung 4 kein Moment, da sie vollständig geöffnet ist und kein Sollmoment vorgegeben wird. Gezeigt ist in Kurve 10 bereits der beschleunigte Wert der Drehzahl der Elektromaschine mit einem annähernd konstanten Drehzahlwert. Zu Beginn der Vorsteuerphase II wird ein vorgesteuerter Wert des Sollmoments zur Steuerung der Kupplung vorgegeben. Mit einer entsprechenden aus natürlichem Signal-/Antwort-Verhalten der Reibungskupplung resultierenden Verzögerung wird das Sollmoment in ein Istmoment umgesetzt, das auf die Kurbelwelle wirkt und die Brennkraftmaschine anreißt. In dem gezeigten Ausführungsbeispiel reagiert die Brennkraftmaschine innerhalb des vorgegebenen Zeitintervalls sofort. Somit braucht kein zusätzliches, erhöhtes Sollmoment in der Vorsteuerphase II angewendet werden. Bei schlechten Bedingungen kann insbesondere ein höheres Lastmoment der Brennkraftmaschine, beispielsweise bei noch nicht erreichter Betriebstemperatur oder sonstigen die innere Reibung der Brennkraftmaschine erhöhenden Einflüssen, erforderlich sein und die auf das vorgesteuerte Sollmoment eingestellte Startkupplung 4 schlupft. In diesem Fall wird nach Ablauf der vorgegebenen Dauer nach Anlegen des ersten Wertes für das vorgesteuerte Sollmoment der Wert erhöht. Diese Iterationsschleife kann bis zu einer vorbestimmten Dauer durchlaufen werden. Ist ein Start der Brennkraftmaschine immer noch nicht erkennbar wird ohne die Regelungsphase III die Startkupplung entsprechend der Endphase IV sofort auf das maximal übertragbare Moment mit allenfalls geringfügigem Schlupf zur Schwingungsdämpfung geschlossen.

Bei einer Steuerung einer Startkupplung mittels eines Sollmoments wird dem ermittelten Sollmoment eine physikalische Stellgröße für einen Kupplungsaktor zugeordnet, beispielsweise ein mittels einer Wegsensorik überprüfter Kupplungsweg oder ein Anpressdruck insbesondere bei der Verwendung einer hydraulisch betätigten Kupplungsaktorik. Es versteht sich, dass diese zugeordneten dem Sollmoment zugeordnete Größen kalibrierbar und adaptierbar sind, um sich ändernde mechanische und physikalische Einflüsse kompensieren zu können.

Nach Beendigung der Vorsteuerphase 2 geht die Vorgabe des Sollmoments in der Regelphase III in eine beschleunigungsabhängige Regelung über, bei der in Abhängigkeit von der Beschleunigung der Kurbelwelle 2a das Sollmoment bestimmt wird. Die Beschleunigung kann dabei durch Auswertung der Differenzdrehzahl zwischen Kurbelwelle 2a und Rotor 3a ermittelt werden. Aus der Kurve 8 wird deutlich, dass bei großer Drehzahldifferenz zu Beginn der Regelungsphase III ein ansteigendes Sollmoment ausgegeben wird, das ein Maximum durchläuft und bei sich angleichenden Drehzahlen der Kurbelwelle 2a und des Rotors 3a wieder abnimmt. Durch diese Beschleunigungsregelung werden die Drehzahlen kontinuierlich aufeinander zugeführt. Nach Erreichen einer vorbestimmbaren Schwelle der Drehzahldifferenz oder einer anderen auf die Beschleunigung zurückführbaren Größe wird bei im Wesentlichen übereinstimmenden Drehzahlen der Kurbelwelle 2a und des Rotors 3a die Startkupplung in der Endphase IV ganz geschlossen. Wie bereits erwähnt ist unter einer geschlossenen Startkupplung 4 eine bis zum maximal übertragbaren Moment geschlossene Kupplung oder eine lediglich bis zu einem übertragbaren Moment, bei dem durch den Verbrennungsprozess der Brennkraftmaschine bedingte Torsionsschwingungen durch Teilschlupf gefiltert werden, geschlossene Kupplung zu verstehen.

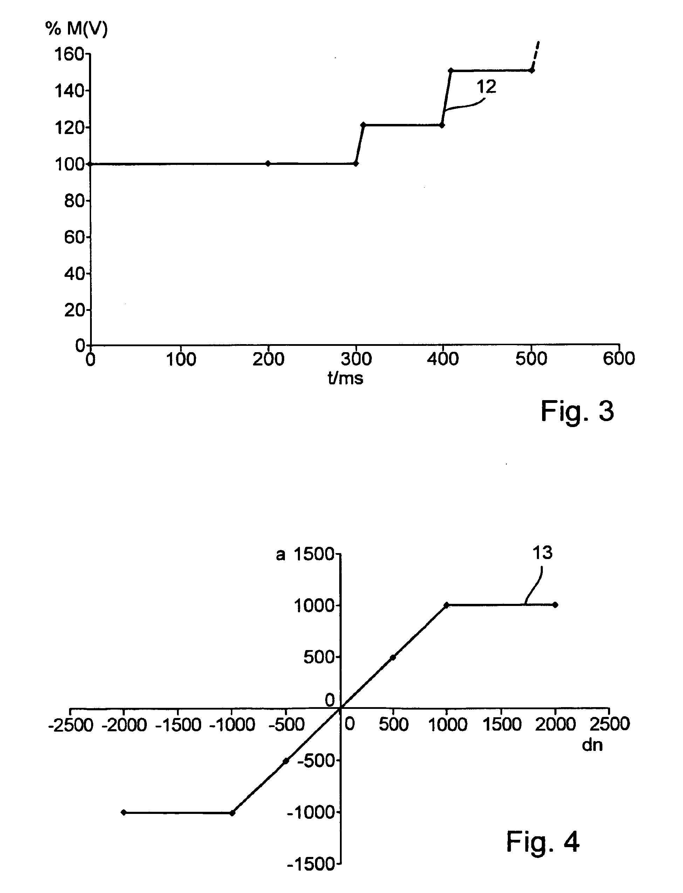

Figur 3 zeigt ein Diagramm 12, in dem die Entwicklung des Vorsteuermoments M(V) über die Zeit t als mögliches Ausführungsbeispiel dargestellt ist. Ausgehend von einem typischen für den Start der Brennkraftmaschine typischen Vorsteuermoment M(V) bei einem Wert von 100 % bleibt dieser Wert für ein vorgegebenes Zeitintervall - im gezeigten Bereich ca. 300 ms - konstant. Wenn keine Anzeichen für einen Start der Brennkraftmaschine, beispielsweise eine an der Kurbelwelle erkennbare Drehzahl, ein Zündimpuls oder dergleichen, erkennbar ist, wird das Vorsteuermoment M(V) um einen vorgebbaren Betrag, beispielsweise um 20 % erhöht. Ist weiterhin ein beginnender Start der Brennkraftmaschine nicht zu detektieren, erfolgt eine weitere Erhöhung, beispielsweise um 50% von der Ausgangsgröße. Die Anhebung der Beträge des Vorsteuermoments M(V) kann noch über einige dieser Zyklen fortgesetzt werden. Nach Überschreiten eines vorgegebenen Zeitlimits, beispielsweise im gezeigten Fall nach 500 ms kann die Startkupplung komplett geschlossen werden. Es versteht sich, dass der Startwert des Vorsteuermoments M(V) an das Verhalten des Hybridfahrzeuges adaptiert werden kann und ausgehend von diesem Ausgangswert bei 100% das Vorsteuermoment Mᵥ entsprechend erhöht wird. Es kann vorteilhaft sein auch die Anzahl der Zyklen, deren Anstiegsbeträge und/oder die Zeitintervalle der einzelnen Beträge vom Anfangswert abhängig zu machen.

Die Figur 4 zeigt ein Diagramm 13 als vorteilhafte Ausgestaltung zur Bestimmung einer Sollbeschleunigung a in willkürlichen Einheiten in Abhängigkeit von der Drehzahldifferenz dn zwischen Rotor der Elektromaschine und Kurbelwelle der Brennkraftmaschine. Mit dem aus dem Diagramm 13 gewonnenen Wert für die Sollbeschleunigung a wird in einem Regelkreis nach Abschluss der Vorsteuerphase das Sollmoment für die Startkupplung bestimmt und damit die Betätigungseinheit oder der Aktor gesteuert. In dem gezeigten Ausführungsbeispiel nimmt die Sollbeschleunigung a linear in einem vorgegebenen Intervall mit der Drehzahldifferenz dn zu beziehungsweise bei negativer Drehzahldifferenz, beispielsweise nach einer Momentenumkehr, wenn die Brennkraftmaschine die Elektromaschine überholt, ab. Bei Erreichen einer vorgegebenen Beschleunigung - hier bei den Werten 1000 beziehungsweise - 1000 wird die Sollbeschleunigung a trotz wachsender Zunahme des Betrags der Drehzahldifferenz dn auf einen konstanten Wert der Sollbeschleunigung a gedeckelt. Die Sollbeschleunigung kann dabei vorteilhafterweise in den Einheiten 1/min/sec angegeben werden.

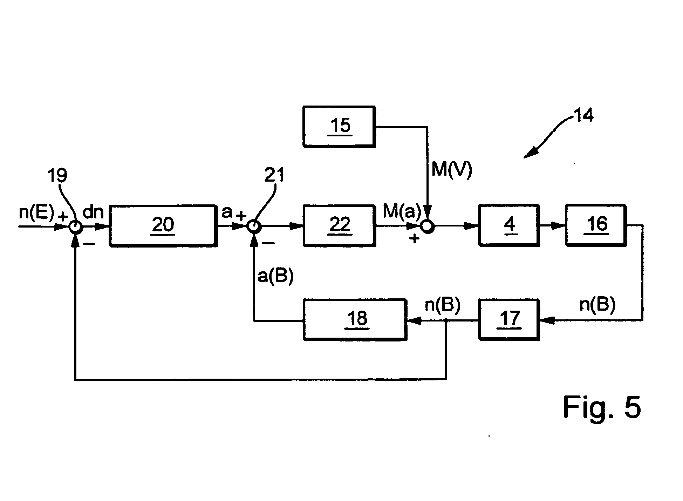

Figur 5 zeigt ein Ausführungsbeispiel eines Regelkreises 14 für die Regelung des Sollmoments der Startkupplung 4 (Figur 1) während eines Startvorgangs der Brennkraftmaschine 2. Während der Vorsteuerphase II (Figur 2) ist lediglich die Vorsteuerung 15 aktiv, die das auf die Startkupplung 4 anzuwendende Sollmoment beispielsweise entsprechend dem in Figur 3 beschriebenen Diagramm 12 ausgibt. Das aus dem Hybridantriebsstrang 16, beispielsweise von einem Drehzahlsensor für die Kurbelwelle gewonnene Drehzahlsignal n(B) der Brennkraftmaschine wird mittels eines Filters 17 gefiltert und in eine Gradientenbildung 18 und an den Knoten 19 abgezweigt. Dort liegt ebenfalls die Drehzahl n(E) der Elektromaschine an, so dass eine Differenzdrehzahl dn an eine Einheit 20 zur Bestimmung der Sollbeschleunigung, beispielsweise entsprechend dem in Figur 4 dargestellten Diagramm 13, eingeleitet wird. Im Knoten 21 wird die Sollbeschleunigung a mit der bereits vorhandenen, aus der Drehzahl n(B) der Brennkraftmaschine in der Gradientenbildung 18 gebildeten Istbeschleunigung a(B) verrechnet. Die entsprechende Regeldifferenz a(diff) wird einem Regler 22, der vorzugsweise ein PI-Regler ist, zugeführt. Der Regler 22 gibt dann eine von der Sollbeschleunigung a beziehungsweise ein von der effektiven Regeldifferenz a(diff) abhängiges Sollmoment M(a) an die Startkupplung 4 aus, das auf das vorgesteuerte Moment M(V) aufaddiert wird.

### Bezugszeichenliste

| | | | |
|---|---|---|---|
| 1 | Hybridantriebstrang | 19 | Knoten |
| 2 | Brennkraftmaschine | 20 | Einheit |
| 2a | Kurbelwelle | 21 | Knoten |
| 3 | Elektromaschine | 22 | Regler |
| 3a | Rotor | a | Sollbeschleunigung |
| 4 | Startkupplung | a(B) | Istbeschleunigung Brennkraftmaschine |
| 5 | Drehmomentwandler | a(diff) | Regeldifferenz |
| 6 | Getriebe | dn | Drehzahldifferenz |
| 7 | Antriebsrad | M | Moment |
| 8 | Kurve | M(a) | Beschleunigungsabhängiges Moment |
| 9 | Kurve | M(V) | Vorsteuermoment |
| 10 | Kurve | n | Drehzahl |
| 11 | Kurve | n(B) | Drehzahl Brennkraftmaschine |
| 12 | Diagramm | n(E) | Drehzahl Elektromaschine |
| 13 | Diagramm | t | Zeit |
| 14 | Regelkreis | I | Beschleunigungsphase |
| 15 | Vorsteuerung | II | Vorsteuerphase |
| 16 | Hybridantriebsstrang | III | Regelphase |
| 17 | Filter | IV | Endphase |
| 18 | Gradientenbildung | | |

## Patentansprüche

1. Verfahren zur Betätigung einer Startkupplung (4) in einem Hybridfahrzeug mit einer Brennkraftmaschine (2) mit einer Kurbelwelle (2a) und einer Elektromaschine (3) mit einem Rotor (3a), wobei zu einem Start der Brennkraftmaschine (2) die Elektromaschine (3) auf eine vorbestimmte Drehzahl beschleunigt und die zwischen Elektromaschine (3) und Brennkraftmaschine (2) wirksame Startkupplung (4) in Abhängigkeit von einem über die Startkupplung (4) zu übertragenden Moment (M) zugestellt wird, wobei in einer ersten Startphase (II) ein Vorsteuermoment (M(V)) auf einen vorgegebenen Wert gesetzt wird und in einer zweiten Startphase (III) bei erkanntem Start der Brennkraftmaschine (2) ein Sollmoment (M(a)) abhängig von der Beschleunigung der Kurbelwelle (2a) geregelt wird, **dadurch gekennzeichnet, dass** eine zur Regelung verwendete Sollbeschleunigung (a) abhängig von der Differenzdrehzahl (dn) zwischen der Kurbelwelle (2a) und dem Rotor (3a) ermittelt wird.

2. Verfahren nach Anspruch 1, **dadurch gekennzeichnet, dass** der Start der Brennkraftmaschine (2) ein Wiederstart nach dem Stillsetzen der Brennkraftmaschine (2) während eines Stillstands des Hybridfahrzeugs ist.

3. Verfahren nach Anspruch 1 oder 2, **dadurch gekennzeichnet, dass** das Vorsteuermoment (M(V)) in der ersten Startphase (II) in Abhängigkeit von der Zeit (t) ab der beginnenden Startphase erhöht wird, bis ein Start der Brennkraftmaschine erkannt wird.

4. Verfahren nach Anspruch 3, **dadurch gekennzeichnet, dass** das Vorsteuermoment (M(V)) rampenförmig erhöht wird.

5. Verfahren nach Anspruch 3, **dadurch gekennzeichnet, dass** das Vorsteuermoment (M(V)) als zeitabhängige Kennlinie in einem Steuergerät hinterlegt und in Abhängigkeit von der Zeit ab Beginn der Startphase ein zeitabhängiges Vorsteuermoment eingestellt wird.

6. Verfahren nach einem der Ansprüche 3 bis 6, **dadurch gekennzeichnet, dass** bei Erreichen einer vorgegebenen Maximalzeit das Vorsteuermoment auf das maximal über die Startkupplung (4) übertragbare Moment erhöht wird.

7. Verfahren nach einem der Ansprüche 1 bis 6, **dadurch gekennzeichnet, dass** die Brennkraftmaschine (2) in der zweiten Startphase (III) in Abhängigkeit von der Beschleunigung (a) der Kurbelwelle (2a) auf eine vorgegebene Zieldrehzahl geregelt wird.

8. Verfahren nach Anspruch 1, **dadurch gekennzeichnet, dass** die Sollbeschleunigung (a) als Kennlinie in Abhängigkeit von der Differenzdrehzahl (dn) in einem Steuergerät abgelegt wird und in Abhängigkeit von der Differenzdrehzahl (dn) in einer Regelung verwendet wird.

9. Verfahren nach einem der Ansprüche 1 bis 8, **dadurch gekennzeichnet, dass** die Startkupplung (4) nach dem Start bei einem kleineren als dem maximal übertragbaren Moment schlupfend betrieben wird

## Claims

1. Method for actuating a starting clutch (4) in a hybrid vehicle, having an internal combustion engine (2) with a crankshaft (2a) and having an electric machine (3) with a rotor (3a), wherein to carry out a start of the internal combustion engine (2), the electric machine (3) is accelerated to a predetermined rotational speed and the starting clutch (4), which acts between the electric machine (3) and internal combustion engine (2), is adjusted in the engagement direction as a function of a torque (M) to be transmitted via the starting clutch (4), wherein in a first start phase (II), a pilot control torque (M(V)) is set to a predefined value, and in a second start phase (III) when a start of the internal combustion engine (2) has been detected, a nominal torque (M(a)) is regulated as a function of the acceleration of the crankshaft (2a), **characterized in that** a nominal acceleration (a) used for regulation is determined as a function of the differential rotational speed (dn) between the crankshaft (2a) and the rotor (3a).

2. Method according to Claim 1, **characterized in that** the start of the internal combustion engine (2) is a restart after the shut-down of the internal combustion engine (2) during a standstill period of the hybrid vehicle.

3. Method according to Claim 1 or 2, **characterized in that**, in the first start phase (II), the pilot control torque (M(V)) is increased as a function of the time (t) since the beginning of the start phase until a start of the internal combustion engine is detected.

4. Method according to Claim 3, **characterized in that** the pilot control torque (M(V)) is increased in a ramped fashion.

5. Method according to Claim 3, **characterized in that** the pilot control torque (M(V)) is stored as a time-dependent characteristic curve in a control unit and a time-dependent pilot control torque is set as a function of the time since the beginning of the start phase.

6. Method according to one of Claims 3 to 6, **characterized in that**, when a predefined maximum time is reached, the pilot control torque is increased to the maximum torque which can be transmitted by means of the starting clutch (4).

7. Method according to one of Claims 1 to 6, **characterized in that**, in the second start phase (III), the internal combustion engine (2) is regulated to a predefined target rotational speed as a function of the acceleration (a) of the crankshaft (2a).

8. Method according to Claim 1, **characterized in that** the nominal acceleration (a) is stored in a control unit as a characteristic curve as a function of the differential rotational speed (dn), and is used as a function of the differential rotational speed (dn) in a regulation.

9. Method according to one of Claims 1 to 8, **characterized in that**, after the start, the starting clutch (4) is operated in a slipping fashion at a lower torque than the maximum transmissible torque.

## Revendications

1. Procédé pour l'actionnement d'un embrayage de démarrage (4) sur un véhicule hybride comprenant un moteur à combustion interne (2) avec un vilebrequin (2a) et un moteur électrique (3) avec un rotor (3a), le moteur électrique (3) étant accéléré jusqu'à un régime prédéfini pour un démarrage du moteur à combustion interne (2) et l'embrayage de démarrage (4) efficace entre le moteur électrique (3) et le moteur à combustion interne (2) étant effectué en fonction d'un couple (M) à transmettre par l'embrayage de démarrage (4), un couple pilote (M(V)) étant placé sur une valeur prédéfinie dans une première phase de démarrage (II) et un couple théorique (M(a)) étant réglé en fonction de l'accélération du vilebrequin (2a) dans une seconde phase de démarrage (III) lorsque le démarrage du moteur à combustion interne (2) est identifié, **caractérisé en ce qu'**une accélération théorique (a) utilisée pour le réglage est déterminée en fonction du régime différentiel (dn) entre le vilebrequin (2a) et le rotor (3a).

2. Procédé selon la revendication 1, **caractérisé en ce que** le démarrage du moteur à combustion interne (2) est un redémarrage après l'arrêt du moteur à combustion interne (2) pendant un arrêt du véhicule hybride.

3. Procédé selon la revendication 1 ou 2, **caractérisé en ce que** le couple pilote (M(V)) est augmenté lors de la première phase de démarrage (II) en fonction du temps (t) à partir de la phase de démarrage initiale jusqu'à ce qu'un démarrage du moteur à combustion soit identifié.

4. Procédé selon la revendication 3, **caractérisé en ce que** le couple pilote (M(V)) est augmenté en forme de rampe.

5. Procédé selon la revendication 3, **caractérisé en ce que** le couple pilote (M(V)) est déposé comme courbe caractéristique dépendante du temps dans un appareil de commande et un couple pilote dépendant du temps est réglé en fonction du temps à partir du début de la phase de démarrage.

6. Procédé selon l'une quelconque des revendications 3 à 6, **caractérisé en ce que** le couple pilote est augmenté jusqu'au couple maximal transmissible par l'embrayage de démarrage (4) lorsqu'un temps maximum prédéfini est atteint.

7. Procédé selon l'une quelconque des revendications 1 à 6, **caractérisé en ce que** le moteur à combustion interne (2) est réglé sur un régime cible prédéfini lors de la seconde phase de démarrage (III) en fonction de l'accélération (a) du vilebrequin (2a). _

8. Procédé selon la revendication 1, **caractérisé en ce que** l'accélération théorique (a) est déposée dans un appareil de commande sous forme de courbe caractéristique en fonction du régime différentiel (dn) et est utilisée dans un réglage en fonction du régime différentiel (dn).

9. Procédé selon l'une quelconque des revendications 1 à 8, **caractérisé en ce que** l'embrayage de démarrage (4) est exploité par glissement après le démarrage dans le cas d'un couple inférieur au couple maximal transmissible.
